(19) Europäisches Patentamt / European Patent Office / Office européen des brevets

(11) **EP 4 601 177 A1**

(12) **EUROPEAN PATENT APPLICATION**

(43) Date of publication:
**13.08.2025 Bulletin 2025/33**

(21) Application number: **25150659.8**

(22) Date of filing: **08.01.2025**

(51) International Patent Classification (IPC):
**H02M 1/36** *(2007.01)*     **H02H 7/122** *(2006.01)*
**H02M 7/493** *(2007.01)*     **H02M 7/487** *(2007.01)*
**H02H 3/087** *(2006.01)*     **H02M 1/32** *(2007.01)*

(52) Cooperative Patent Classification (CPC):
**H02M 1/36; H02H 3/087; H02H 7/1222;**
**H02M 7/487; H02M 7/493;** H02M 1/32

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **08.02.2024 CN 202410178262**

(71) Applicant: **Sungrow Power Supply Co., Ltd.**
**Hefei, Anhui 230088 (CN)**

(72) Inventors:
• **LI, Bijie**
  **Hefei, 230088 (CN)**
• **ZHANG, Shubin**
  **Hefei, 230088 (CN)**
• **YU, Yanfei**
  **Hefei, 230088 (CN)**
• **HUANG, Zhifeng**
  **Hefei, 230088 (CN)**

(74) Representative: **Epping - Hermann - Fischer**
**Patentanwaltsgesellschaft mbH**
**Schloßschmidstraße 5**
**80639 München (DE)**

(54) **INVERTER, METHOD FOR TURNING OFF INVERTER, AND PHOTOVOLTAIC SYSTEM**

(57)     An inverter, a method for turning off an inverter, and a photovoltaic system are provided. Pulse blocking is performed on the inverter circuit in response to a short circuit of a negative electrode of a DC source to ground. Upon determining that a current of a first switching module is in a descending trend after the inverter circuit is subjected to the pulse blocking, the first switching module and a second switching module with a current of zero are turned off simultaneously in response to a first electrical parameter of the first switching module reaching a preset electrical parameter; or the first switching module and a second switching module with a current of zero are turned off simultaneously within a first duration starting from a time instant when an actual electrical parameter of the first switching module reaches the preset electrical parameter.

**FIG. 2**

**Description**

**FIELD**

The present disclosure relates to the technical filed of inverters, in particular to an inverter, a method for turning off an inverter, and a photovoltaic system.

**BACKGROUND**

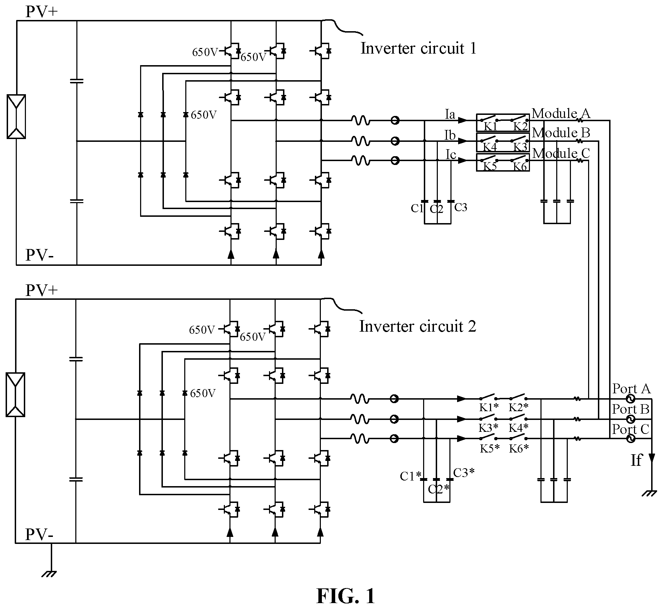

During an operation of a photovoltaic inverter on site, output ends of multiple inverters are connected in parallel to transmit electric energy to a power grid, and a phase loss occurs due to an open relay of one phase or a blown alternating-current fuse, resulting in phase power unbalance in line voltages of the power grid. FIG. 1 is a schematic structural diagram illustrating that output ends of multiple inverters are connected in parallel to form a branch and the branch is connected to a power grid. In a case that grounding protection is performed on a negative electrode of a photovoltaic string connected to one of the inverters, after one phase relay is turned off, alternating-current equivalent parallel capacitances are different during operation of the other inverter, resulting in a large difference in three-phase capacitance, which may further lead to circulating current such as alternating-current resonance and increase the risk of failure.

**SUMMARY**

In view of this, an inverter, a method for turning off an inverter, and a photovoltaic system are provided according to the present disclosure, to avoid the problem of phase power unbalance in voltage transmitted by other inverters to a power grid if grounding protection is performed on a negative electrode of a photovoltaic string connected to an inverter parallel with the other inverters.

In a first aspect, an inverter is provided according to the present disclosure. The inverter includes an inverter circuit, switching modules and a controller. An input end of the inverter circuit is configured to connect a direct-current, DC, source, an output end of each phase of the inverter circuit is connected to a corresponding switching module among the switching modules, and output ends of the switching modules are configured to connect a power grid. The controller is configured to: perform pulse blocking on the inverter circuit in response to a short circuit of a negative electrode of the DC source to ground, where the pulse blocking includes disabling a drive pulse for each switching transistor in the inverter circuit; and determine, upon determining that a current of a first switching module is in a descending trend after the inverter circuit is subjected to the pulse blocking, whether a first electrical parameter of the first switching module reaches a preset electrical parameter at a current time instant, where the preset electrical parameter corresponds to a safe current of the first switching module; and turn off, in response to the first electrical parameter of the first switching module reaching the preset electrical parameter, the first switching module and a second switching module with a current that is currently monitored as zero simultaneously; or turn off the first switching module and a second switching module with a current that is currently zero simultaneously within a first duration starting from a time instant when an actual electrical parameter of the first switching module reaches the preset electrical parameter, where the first switching module and the second switching module each are one of the switching modules.

In an embodiment, for the determining whether a first electrical parameter of the first switching module reaches a preset electrical parameter, the controller is configured to determine that the first electrical parameter of the first switching module reaches the preset electrical parameter if the first electrical parameter is a current and the first electrical parameter of the first switching module is less than or equal to a first preset current; and determine that the first electrical parameter of the first switching module reaches the preset electrical parameter if the first electrical parameter is a voltage and the first electrical parameter of the first switching module is greater than or equal to a first preset voltage.

In an embodiment, after the determining whether a first electrical parameter of a first switching module reaches a preset electrical parameter at a current time instant, the controller is further configured to: continuously monitor the current of the first switching module if the first electrical parameter is the current and the current of the first switching module is greater than the first preset current, until it is monitored that the current of the first switching module decreases to be less than or equal to the first preset current; and determine that the first electrical parameter of the first switching module reaches the preset electrical parameter; or continuously monitor a voltage of the first switching module if the first electrical parameter is the voltage and the voltage of the first switching module is less than the first preset voltage, until it is monitored that the voltage of the first switching module increases to be greater than or equal to the first preset voltage; and determine that the first electrical parameter of the first switching module reaches the preset electrical parameter.

In an embodiment, after the turning off the first switching module and the second switching module simultaneously, the controller is further configured to: turn off a switching module that is on among the switching modules connected to the inverter circuit upon monitoring that a current of the switching module is in the descending trend and the first electrical parameter of the switching module reaches the preset electrical parameter.

**EP 4 601 177 A1**

In an embodiment, the actual electrical parameter reaching the preset electrical parameter lies in that an actual current is less than or equal to the preset electrical parameter.

In an embodiment, a first time length is a time length from a time instant when the current of the first switching module decreases to zero to a nearest time instant when the voltage of the first switching module is zero. The preset electrical parameter is zero; the first duration is a sum of a first time length and a quarter of a period of phase power corresponding to the first switching module. Alternatively, the preset electrical parameter is a current corresponding to a first time instant, the first time instant is a periodic time instant determined by subtracting a first delay duration from a time instant when a current in a periodic current curve corresponding to the first switching module decreases to zero, the first delay duration includes a duration from a time instant when a turn-off signal is sent to the first switching module to a time instant when the first switching module is actually turned off, and the first duration is a sum of the first time length and a quarter of a period of phase power corresponding to the first switching module. Alternatively, the preset electrical parameter is a current corresponding to a second time instant, the second time instant is a periodic time instant determined by subtracting a second delay duration from a time instant when a current in a periodic current curve corresponding to the first switching module decreases to zero; the second delay duration includes a duration from a time instant when a turn-off signal is sent to the first switching module to a time instant when the first switching module is actually turned off, and a power-resistant duration from a time instant corresponding to a maximum impulse current withstood by the first switching module to the time instant when the current in a descending portion of the periodic current curve decreases to zero; and the first duration is a sum of the first time length, a quarter of a period of phase power corresponding to the first switching module and two times of the power-resistant duration.

In an embodiment, the actual electrical parameter reaching the preset value lies in that an actual voltage is greater than or equal to the preset electrical parameter.

In an embodiment, a first time length is a time length from a time instant when the current of the first switching module decreases to zero to a nearest time instant when a voltage of the first switching module is zero. The preset electrical parameter is a voltage corresponding to a time instant when the current of the first switching module decreases to zero; the first duration is a sum of the first time length and a quarter of a period of phase power corresponding to the first switching module. Alternatively, the preset electrical parameter is a voltage corresponding to a time instant determined by subtracting a first delay duration from a time instant when the current of the first switching module decreases to zero, the first delay duration includes a duration from a time instant when a turn-off signal is sent to the first switching module to a time instant when the first switching module is actually turned off; and the first duration is a sum of the first time length and a quarter of a period of phase power corresponding to the first switching module. Alternatively, the preset electrical parameter is a voltage corresponding to a time instant determined by subtracting a second delay duration from a time instant when the current of the first switching module decreases to zero; the second delay duration includes a duration from a time instant when a turn-off signal is sent to the first switching module to a time instant when the first switching module is actually turned off, and a power-resistant duration from a time instant corresponding to a maximum impulse current withstood by the first switching module to a time instant when the current in a descending portion of the periodic current curve decreases to zero; and the first duration is a sum of the first time length, a quarter of a period of phase power corresponding to the first switching module and two times of the power-resistant duration.

In an embodiment, the first time length is calculated by the following equation:

$$\Delta T = \frac{2\pi - \arcsin\left(\frac{V}{\sqrt{2}U}\right)}{2\pi} * \frac{1}{f}, \quad \frac{3\pi}{2} < \arcsin\left(\frac{V}{\sqrt{2}U}\right) < 2\pi$$

where, U represents a rated voltage of the phase power corresponding to the first switching module, V represents a voltage of the phase power corresponding to the first switching module, and f represents a frequency of the phase power corresponding to the first switching module.

In an embodiment, after the turning off the first switching module and a second switching module with a current that is currently zero simultaneously, the controller is further configured to: turn off a switching module that is on among the switching modules connected to the inverter circuit upon monitoring that a current of the switching module is in the descending trend and the actual electrical parameter of the switching module reaches the preset electrical parameter.

In an embodiment, for determining that a current of a first switching module is in a descending trend, the controller is further configured to: continuously acquire multiple currents of the first switching module; and determine that the current of the first switching module is in the descending trend in response to the multiple currents of the first switching module in the descending trend; or determine that the current of the first switching module is in the descending trend upon determining that a periodic voltage curve of phase power corresponding to the first switching module is in a rising trend.

In a second aspect, a method for turning off an inverter is further provided according to the present disclosure. The inverter includes: an inverter circuit and switching modules. An input end of the inverter circuit is configured to connect a direct-current, DC, source, an output end of each phase of the inverter circuit is connected to a corresponding switching

3

module among the switching modules, and output ends of the switching modules are configured to connect a power grid. The method includes: performing pulse blocking on the inverter circuit in response to a short circuit of a negative electrode of the DC source to ground, where the pulse blocking includes disabling a drive pulse for each switching transistor in the inverter circuit; and determining, upon determining that a current of a first switching module is in a descending trend after the inverter circuit is subjected to the pulse blocking, whether a first electrical parameter of the first switching module reaches a preset electrical parameter at a current time instant, where the preset electrical parameter corresponds to a safe current of the first switching module; and turning off, in response to the first electrical parameter of the first switching module reaching the preset electrical parameter, the first switching module and a second switching module with a current that is currently monitored as zero simultaneously; or, turning off the first switching module and a second switching module with a current that is currently zero simultaneously within a first duration starting from a time instant when an actual electrical parameter of the first switching module reaches a preset electrical parameter, where the first switching module and the second switching module each are one of the switching modules.

In a third aspect, a photovoltaic system is provided according to the present disclosure. The photovoltaic system includes a photovoltaic string and an inverter, where the photovoltaic string is connected to an input end of the inverter, and is configured to supply direct-current, DC, power to the inverter; an output end of the inverter is configured to connect a power grid, convert DC power into alternating-current, AC, power, and transmit the AC power to the power grid; and the inverter is at least one of the inverter in the first aspect described above or the inverter to which the method in the second aspect described above is applied.

The inverter, the method for turning off an inverter, and the photovoltaic system are provided according to the present disclosure. In the present disclosure, the inverter circuit converts the DC power supplied by the DC source into AC power, and transmit the AC power to the power grid, and the output end of each phase of the inverter circuit is connected to a corresponding switching module. First, pulse blocking is performed on the inverter circuit in response to a short circuit of the negative electrode of the DC source to the ground. Upon determining that a current of the first switching module is in the descending trend after the inverter circuit is subjected to the pulse blocking, the first switching module and the second switching module with a current that is currently monitored as zero are turned off simultaneously in response to the first electrical parameter of the first switching module reaching the preset electrical parameter; or, the first switching module and a second switching module with a current that is currently zero are turned off simultaneously within a first duration starting from a time instant when an actual electrical parameter of the first switching module reaches the preset electrical parameter. The first switching module and the second switching module are turned off simultaneously, disconnecting parallel capacitors in the short-circuited inverter to the ground from the power grid, avoiding the problem of circulating current such as alternating-current resonance due to a capacitance difference between various phases of other inverters in normal operation is large resulted from that the parallel capacitors in the short-circuited inverter to the ground are connected to the power grid, so that the other inverters in normal operation can stably transmit electric energy to the power grid.

## BRIEF DESCRIPTION OF THE DRAWINGS

In order to illustrate technical solutions in embodiments of the present disclosure or the conventional technology more clearly, drawings to be used in the embodiments or the conventional technology are introduced simply hereinafter. It is apparent that the drawings described below show only some embodiments of the present disclosure. For those skilled in the art, other drawings may be obtained based on the provided drawings without any creative effort.

FIG. 1 is a schematic structural diagram illustrates that output ends of multiple inverters are connected in parallel to form a branch, and the branch is connected to a power grid according to the background of the present disclosure;

FIG. 2 is a schematic structural diagram of an inverter according to an embodiment of the present disclosure;

FIG. 3 is a schematic diagram of a periodic current curve and a periodic voltage curve of each phase after an inverter is short-circuited to ground according to an embodiment of the present disclosure; and

FIG. 4 is a schematic flowchart of a method for turning off an inverter according to an embodiment of the present disclosure.

## DETAILED DESCRIPTION

During an operation of a photovoltaic inverter on site, output ends of multiple inverters are connected in parallel to transmit electric energy to a power grid, and a phase loss occurs due to an open relay of one phase or a blown alternating-current fuse, resulting in phase power unbalance in line voltages of the power grid. As shown in FIG. 1, in a case that grounding protection is performed on a photovoltaic string connected to an inverter in an inverter circuit 1, and a switching module A of the inverter circuit 1 is turned off, the inverter circuit 1 is still connected to a capacitor C2 and a capacitor C3. As a result, alternating-current equivalent parallel capacitances are different during the operation of the inverter connected to an inverter circuit 2, resulting in a relatively large difference in three-phase capacitance of the inverter connected to the inverter circuit 2, which may further lead to circulating current such as alternating-current resonance, and increase the risk of failure.

In view of the above problems, an inverter, a method for turning off an inverter, and a photovoltaic system are provided according to the present disclosure. The inverter includes an inverter circuit, switching modules and a controller, where an input end of the inverter circuit is configured to connect a DC source, an output end of each phase of the inverter circuit is connected to a corresponding switching module among the switching modules, and output ends of the switching modules are configured to connect a power grid. The controller is configured to perform pulse blocking on the inverter circuit in response to a short circuit of a negative electrode of the DC source to ground, where the pulse blocking includes disabling a drive pulse for each switching transistor in the inverter circuit; and determine, upon determining that a current of a first switching module is in a descending trend after the inverter circuit is subjected to the pulse blocking, whether a first electrical parameter of the first switching module reaches a preset electrical parameter at a current time instant, where the preset electrical parameter corresponds to a safe current of the first switching module; and turn off, in response to the first electrical parameter of the first switching module reaching the preset electrical parameter, the first switching module and a second switching module with a current that is currently monitored as zero simultaneously; or, turn off the first switching module and a second switching module with a current that is currently zero simultaneously within a first duration starting from a time instant when an actual electrical parameter of the first switching module reaches the preset electrical parameter, where the first switching module and the second switching module each are one of the switching modules; where the first switching module and the second switching module each are one of the switching modules. In the above description, the first switching module and the second switching module are turned off simultaneously, which may be referred to FIG. 1. As shown in FIG. 1, if the switching module A and the switching module B are turned off simultaneously, a capacitor C1 and a capacitor C2 are disconnected from the power grid, a capacitor C3 has one terminal connected to the switching module C and has the other terminal disconnected from the switching module. Consequently, the capacitor C3 is disconnected from the power grid, so that the capacitors in the inverter short-circuited to the ground do not affect other inverters connected in parallel with the short-circuited inverter to transmit electric energy to the power grid if the switching module A and the switching module B are turned off simultaneously, avoiding an occurrence of the circulating current such as alternating-current resonance, so that other inverters in normal operation can stably transmit electric energy to the power grid.

In order to understand the features and technical content of the embodiments of the present disclosure more thoroughly, implementations of the embodiments of the present disclosure are described in detail below with reference to the drawings. The drawings are only for the purpose of reference and illustration, and are not intended to limit the embodiments of the present disclosure. In the following description of the technology, to facilitate explanation, numerous details are set forth in order to provide a thorough understanding of the disclosed embodiments. However, one or more embodiments may still be implemented without these details. In other instances, well-known structures and devices may simplify presentation for simplicity of the drawings.

In the specification, the claims and the drawings of the embodiments of the present disclosure, terms such as "first" and "second" are merely for distinguishing similar objects rather than describing a specific order or sequence. The data used in such a way is interchangeable in proper circumstances, to facilitate describing the embodiments of the present disclosure. In an embodiment, the terms "comprise", "include", and any variations thereof are intended to cover non-exclusive inclusion.

Unless otherwise stated, the term " plurality" or "multiple" means two or more.

In the embodiments of the present disclosure, the character "/" indicates an "or" relationship between the objects before and after. For example, A/B represents: A or B.

The term "and/or" is an association relationship describing an object, indicating that there may be three relationships. For example, A and/or B represents three relationships: A, B, or A and B.

In order to make the purpose, technical solutions and advantages of the embodiments of the present disclosure more clear, technical solutions in the embodiments of the present disclosure are described clearly and completely hereinafter with reference to the drawings in the embodiments of the present disclosure. Apparently, the described embodiments are only some, rather than all of the embodiments of the present disclosure. Based on the embodiments of the present disclosure, all other embodiments obtained by those skilled in the art without any creative work fall into the protection scope of the present disclosure.

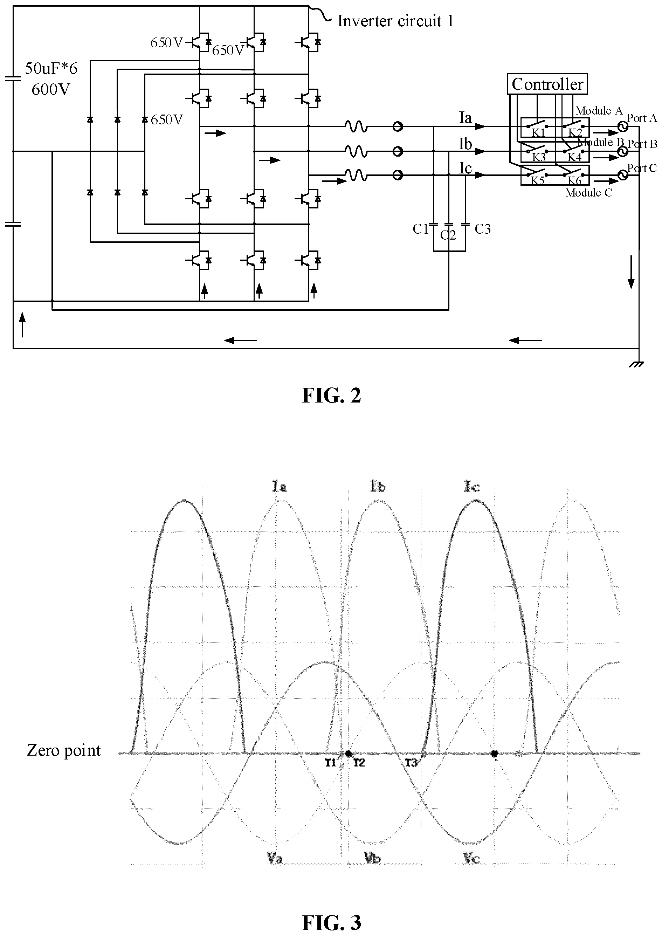

FIG.2 is a schematic structural diagram of an inverter. FIG. 2 is a schematic structural diagram only illustrating that an inverter with an inverter circuit 1 is connected to a power grid (where the inverter is connected to the power grid through a port A, a port B, and a port C in FIG. 2, and is configured to transmit corresponding phase power to the power grid), and other inverters that are connected in parallel to the inverter and are connected to the power grid are not illustrated in the FIG. 2. It should be noted that, a short-circuited loop of the inverter to ground is indicated by the arrow in FIG. 2.

Referring to FIG. 2, an inverter includes an inverter circuit, switching modules and a controller. An input end of the inverter circuit is configured to connect a DC source, an output end of each phase of the inverter circuit is connected to a corresponding switching module among the switching modules, and output ends of the switching modules are configured to connect a power grid.

The DC source may be a photovoltaic string, a DC bus connected to multiple photovoltaic strings, or may be other energy storage modules capable of storing DC power.

The switching module may include at least one relay switch. The controller turns off one relay switch or multiple relay switches in the switching module, thus turning off the switching module. For example, in FIG. 2, the switching module A includes K1 and K2 connected in series.

The inverter circuit is a multi-phase inverter circuit. For example, referring to the inverter circuit shown in FIG. 2, the inverter circuit is a three-phase inverter circuit. Corresponding to the three-phase inverter circuit in FIG. 2, the switching module A, a switching module B, and a switching module C are arranged. Each phase of the inverter circuit is connected to the power grid through the switching module. For example, the switching module A includes K1 and K2 connected in series, the output end of the switching module A is connected to the port A to transmit power to the power grid. Similarly, the switching module B transmits phase power to the power grid through the port B, and the switching module C transmits phase power to the power grid through the port C.

The controller is configured to perform pulse blocking on the inverter circuit in response to a short circuit of a negative electrode of the DC source to the ground, where the pulse blocking includes disabling a drive pulse for each switching transistor in the inverter circuit.

In an embodiment, upon determining that a current of a first switching module is in a descending trend after the inverter circuit is subjected to the pulse blocking, it is determined whether a first electrical parameter of the first switching module reaches a preset electrical parameter at a current time instant, where the preset electrical parameter corresponds to a safe current of the first switching module. In response to the first electrical parameter of the first switching module reaching the preset electrical parameter, the first switching module and a second switching module with a current of zero at the current time instant are turned off simultaneously.

The safe current described above is determined based on a maximum impulse current that can be withstood by the switching module. For example, the safe current is zero if the switching module fails to withstand the impulse current.

The electrical parameter of the switching module may be acquired from an input terminal of the switching module, or may be acquired from an output terminal of the switching module.

In an embodiment, the first electrical parameter may be a current acquired from the first switching module. The preset electrical parameter is a first preset current, and the first preset current may be determined based on the safe current of the first switching module and a periodic current curve and a periodic voltage curve of each phase power after the inverter is short-circuited to the ground as shown in FIG. 3. For example, the first preset current may be the safe current, or may be a current corresponding to a time instant obtained by subtracting a first delay duration from a time instant corresponding to the safe current in a descending portion of the periodic current curve of phase power corresponding to the first switching module in FIG. 3. The first delay duration is a duration from a time instant when a turn-off signal is sent to the first switching module to a time instant when the first switching module is actually turned off.

In another embodiment, the first electrical parameter may be a voltage acquired from the first switching module. The preset electrical parameter is a first preset voltage, and the first preset current may be determined based on the safe current of the first switching module and the periodic current curve and the periodic voltage curve of each phase power after the inverter is short-circuited to the ground as shown in FIG. 3. For example, the first preset voltage may be a voltage corresponding to the safe current, or may be a voltage corresponding to the time instant obtained by subtracting the first delay duration from a time instant corresponding to the safe current in the descending portion of the periodic current curve of the phase power corresponding to the first switching module in FIG. 3.

In another embodiment, upon determining that the current of the first switching module is in a descending trend after the inverter circuit is subjected to the pulse blocking, the first switching module and the second switching module with a current of zero at a current time instant are turned off simultaneously within a first duration starting from a time instant when an actual electrical parameter of the first switching module reaches the preset electrical parameter. The first switching module and the second switching module each are one of the switching modules.

For example, referring to FIG. 3, the current Ia and the current Ic are both zero within a time interval from T1 to T3, and an A-phase switching module and a C-phase switching module are turned off simultaneously.

Based on the inverter, the first switching module and the second switching module are turned off simultaneously. For example, referring to FIG. 1, if the switching module A and the switching module C are turned off simultaneously, the capacitor C1 and the capacitor C3 in FIG. 1 are disconnected from the power grid. The capacitor C2 has only one terminal connected to the switching module B, and has the other terminal disconnected from the switching module. Consequently, the capacitor C2 is disconnected from the power grid, so that the capacitors in the inverter short-circuited to the ground do not affect other inverters connected in parallel with the short-circuited inverter to transmit electric energy to the power grid if the switching module A and the switching module C are turned off simultaneously, avoiding the circulating current such as alternating-current resonance, so that other inverters in normal operation can stably transmit electric energy to the power grid.

In the embodiment described above, upon determining that the current of the first switching module is in the descending trend after the inverter circuit is subjected to pulse blocking, it is determined whether the first electrical parameter of the first switching module reaches the preset electrical parameter at a current time instant, where the preset electrical parameter corresponds to the safe current of the first switching module. In response to the first electrical parameter of the first switching module reaching the preset electrical parameter, the first switching module and the second switching module with a current of zero at the current time instant are turned off simultaneously.

In a case that the first electrical parameter is a current, it is determined that the first electrical parameter of the first switching module reaches the preset electrical parameter if the first electrical parameter of the first switching module is less than or equal to the first preset current, the current of the first switching module is continuously monitored if the current of the first switching module is greater than the first preset current until it is monitored that the current of the first switching module decreases to be less than or equal to the first preset current, and then it is determined that the first electrical parameter of the first switching module reaches the preset electrical parameter.

Taking the inverter in FIG. 2 and FIG. 3 as an example, the first electrical parameter is a current, and the preset electrical parameter is the first preset current. The first preset current may be the safe current of the first switching module, or may be the current corresponding to the time instant obtained by subtracting the first delay duration from the time instant corresponding to the safe current in the descending portion of the periodic current curve of the phase power corresponding to the first switching module in FIG. 3. The first delay duration is a duration from the time instant when the turn-off signal is sent to the first switching module to the time instant when the first switching module is actually turned off.

For example, referring to FIG. 3, the periodic current curve of the A-phase current Ia corresponding to the switching module A is taken as an example. In the descending portion of the periodic current curve, if the safe current of zero corresponding to a time instant T1, the current corresponding to the time instant obtained by subtracting the first delay duration of the switching module A from the time instant T1 is the first preset current of the switching module A.

For example, the first preset current of the first switching module is set to 0.6 amps (A), and it is determined that the current of the first switching module is in the descending trend. In an embodiment, the first electrical parameter (i.e., the current) of the first switching module is acquired as 0.5A at a current time instant, and the first electrical parameter 0.5A of the first switching module at the current time instant is less than the first preset current 0.6A of the first switching module, and thus it is determined that the first electrical parameter of the first switching module reaches the preset electrical parameter. In another embodiment, if the first electrical parameter (i.e., the current) of the first switching module is acquired as 1A at a current time instant, and the current of the 1A is greater than the first preset current 0.6 A of the first switching module, and thus the current of the first switching module is continuously monitored. For example, the current of the first switching module is continuously monitored as 0.9A, 0.7A and 0.5A, until it is monitored that the current of the first switching module is less than or equal to the first preset current. That is, it is determined that the first electrical parameter of the first switching module reaches the preset electrical parameter if it is monitored that the current of the first switching module decreases to 0.5A which is less than or equal to the first preset current 0.6 A.

Alternatively, in a case that the first electrical parameter is a voltage, it is determined that the first electrical parameter of the first switching module reaches the preset electrical parameter if the first electrical parameter of the first switching module is greater than or equal to the first preset voltage; and the voltage of the first switching module is continuously monitored if the voltage of the first switching module is less than the first preset voltage until it is monitored that the voltage of the first switching module increases to be greater than or equal to the first preset voltage, and then it is determined that the first electrical parameter of the first switching module reaches the preset electrical parameter.

The inverter in FIG. 2 and FIG. 3 are taken as an example. The first electrical parameter is the voltage, and the preset electrical parameter is the first preset voltage. The first preset voltage may be a voltage corresponding to the safe current of the first switching module, or may be a voltage corresponding to the time instant obtained by subtracting the first delay duration from the time instant corresponding to the safe current in the descending portion of the periodic current curve of the phase power corresponding to the first switching module in FIG. 3.

For example, referring to FIG. 3, the periodic current curve of the A-phase current Ia and the periodic voltage curve corresponding to the switching module A are taken as an example. In the descending portion of the periodic current curve and the corresponding periodic voltage curve, if the safe current is zero at the time instant T1, the voltage corresponding to the time instant obtained by subtracting the first delay duration of the switching module A from the time instant T1 is the first preset voltage of the switching module A.

For example, the first preset voltage of the first switching module is set to -0.5 volts (V), and it is determined that the current of the first switching module is in the descending trend (or the voltage is in a rising trend). In an embodiment, the first electrical parameter (i.e., the voltage) of the first switching module is acquired as -0.4V at a current time instant, and the first electrical parameter -0.4 of the first switching module at the current time instant is greater than the first preset voltage -0.5V of the first switching module, and thus it is determined that the first electrical parameter of the first switching module reaches the preset electrical parameter. In another embodiment, the first electrical parameter (i.e., the voltage) of the first switching module is acquired as -1V at a current time instant, and the voltage of the -1V is less than the first preset voltage -0.5V of the first switching module, and thus the voltage of the first switching module is continuously monitored. For example, the voltage of the first switching module is continuously monitored as -0.85V, -0.65V and -0.45V, until it is monitored that the voltage of the first switching module greater than or equal to the first preset voltage. That is, it is determined that the first electrical parameter of the first switching module reaches the preset electrical parameter if it is monitored that the voltage of the first switching module increases to -0.45V which is greater than the first preset voltage -0.5V

A time interval for acquiring the first electrical parameter of the first switching module may be constant, or may change. An electrical parameter acquisition module may be arranged for acquiring and recording the electrical parameter. For example, the time interval is determined based on a frequency or a period of phase power of the inverter circuit. For example, the frequency of the phase power is 50Hz, the period of the phase power is 0.025, and the time interval may be one twentieth of the period, that is, 0.001S, so that the current change trend can be determined by multiple times of acquisitions.

After the first switching module and the second switching module are turned off simultaneously, a switching module that is on among the switching modules connected to the inverter circuit is turned off upon monitoring that a current of the switching module is in the descending trend and the first electrical parameter of the switching module reaches the preset electrical parameter.

In a case that the inverter is a three-phase inverter, for example, the three-phase inverter shown in FIG. 2, after the switching modules corresponding to two phases (i.e., a phase A and a phase C) are turned off, the switching module corresponding to the remaining phase (i.e., a phase B) may be turned off. Therefore, the B-phase switching module may be turned off in response to the current of the B-phase switching module in the descending trend, and the first electrical parameter of the B-phase switching module reaching the preset electrical parameter.

In the above embodiment, upon determining that the current of the first switching module is in the descending trend after the inverter circuit is subjected to the pulse blocking, the first switching module and the second switching module with the current of zero are turned off simultaneously within the first duration starting from the time instant when it is monitored that the actual electrical parameter of the first switching module reaches the preset electrical parameter. The first switching module and the second switching module each are one of the switching modules.

Within the first duration starting from the time instant when it is monitored that the actual electrical parameter of the first switching module reaches the preset electrical parameter, the first switching module and the second switching module with the current of zero are turned off simultaneously. The first duration is used to increase a time range for turn-off control by the controller, reduce a situation that the controller does not perform turn-off control until a next cycle, that is, reduce a situation that the switches withstand a large impulse current again during a process of waiting for the next cycle.

The monitoring may be implemented by continuously high-frequency sampling a current, to determine the current change trend and the current.

In another embodiment, the preset electrical parameter and the first duration are implemented in multiple manners, and details are described hereinafter.

In an embodiment, the actual electrical parameter reaching the preset electrical parameter lies in that an actual current is less than or equal to the preset electrical parameter.

The actual electrical parameter of the first switching module is a current actually acquired by the first switching module, that is, the actual current. The actual current is less than or equal to the preset electrical parameter in multiple manners, depending on the actual situations, and details are described as follows.

In a case that the first delay duration is ignored, the preset electrical parameter is zero. The first duration is a sum of a first time length and a quarter of a period of phase power corresponding to the first switching module. The first time length is a time length from a time instant when the current of the first switching module decreases to zero to a nearest time instant when the voltage of the first switching module is zero.

Referring to FIG. 3, the first duration is a time length from T1 to T3. The first time length is a time length from T1 to T2.

In a case that the first delay duration is considered, the preset electrical parameter is a current corresponding to a first time instant. The first time instant is a periodic time instant determined by subtracting the first delay duration from a time instant when the current in the periodic current curve corresponding to the first switching module decreases to zero. The first delay duration includes a duration from the time instant when the turn-off signal is sent to the first switching module to the time instant when the first switching module is actually turned off. The first duration is a sum of the first time length and the quarter of the period of phase power corresponding to the first switching module.

The first delay duration is mainly caused by a signal delay duration of a micro control unit (MCU) of the controller, a turn-off duration of the relay, a turn-off duration of the driving circuit, or the like. The signal delay duration of the MCU is determined based on human experience, the turn-off duration of the relay is determined based on the relay parameter, and the turn-off duration of the driving circuit is determined based on a driving voltage.

In a case that the first delay duration and a power-resistant duration are considered, the preset electrical parameter is a current corresponding to a second time instant. The second time instant is a periodic time instant determined by subtracting a second delay duration from the time instant when the current in the periodic current curve corresponding to the first switching module decreases to zero. The second delay duration includes a duration from the time instant when the turn-off signal is sent to the first switching module to the time instant when the first switching module is actually turned off, and the power-resistant duration from a time instant corresponding to a maximum impulse current withstood by the first switching module to the time instant when the current in the descending portion of the periodic current curve decreases to zero.

It should be noted that, the power-resistant duration of the first switching module is approximately equal to a power-resistant duration of the second switching module. The first power-resistant duration of the first switching module is the duration from the time instant corresponding to the maximum impulse current withstood by the first switching module to the time instant when the current in the descending portion of the periodic current curve corresponding to the first switching module decreases to zero. The power-resistant duration of the second switching module is a duration from a time instant when a current in a rising portion of the periodic current curve corresponding to the second switching module is zero to a time instant corresponding to a maximum impulse current withstood by the second switching module. If the power-resistant duration of the first switching module is not equal to the power-resistant duration of the second switching module, a power-resistant duration with a short duration is selected from the two power-resistant durations as the final power-resistant duration.

In another embodiment, the actual electrical parameter reaching the preset electrical parameter lies in that an actual voltage is greater than or equal to the preset electrical parameter.

The actual electrical parameter of the first switching module is a voltage actually acquired by the first switching module, that is, the actual voltage. In addition, the actual voltage is greater than or equal to the preset electrical parameter in multiple manners, depending on the actual situations, and details are described as follows.

In a case that the first delay duration is ignored, the preset electrical parameter is a voltage corresponding to a time instant when a current of the first switching module decreases to zero. The first duration is a sum of a first time length and a quarter of a period of phase power corresponding to the first switching module. The first time length is a time length from the time instant when the current of the first switching module decreases to zero to a nearest time instant when the voltage of the first switching module is zero.

In a case that the first delay duration is considered, the preset electrical parameter is a voltage corresponding to a time instant determined by subtracting the first delay duration from a time instant when a current of the first switching module decreases to zero. The first delay duration includes a duration from a time instant when the turn-off signal is sent to the first switching module to a time instant when the first switching module is actually turned off. The first duration is a sum of the first time length and a quarter of a period of phase power corresponding to the first switching module.

In a case that the first delay duration and the power-resistant duration are considered, the preset electrical parameter is a voltage corresponding to a time instant determined by subtracting a second delay duration from the time instant when the current of the first switching module decreases to zero. The second delay duration includes a duration from a time instant when the turn-off signal is sent to the first switching module to the time instant when the first switching module is actually turned off, and the power-resistant duration from a time instant corresponding to the maximum impulse current withstood by the first switching module to the time instant when the current in the descending portion of the periodic current curve decreases to zero. The first duration is a sum of the first time length, the quarter of the period of phase power corresponding to the first switching module and two times of the power-resistant duration.

The first time length (i.e., the time length from T1 to T2 in FIG. 3) is calculated by the following equation:

$$\Delta T = \frac{2\pi - \arcsin\left(\frac{V}{\sqrt{2}U}\right)}{2\pi} * \frac{1}{f}, \quad \frac{3\pi}{2} < \arcsin\left(\frac{V}{\sqrt{2}U}\right) < 2\pi$$

where, U represents a rated voltage of the phase power corresponding to the first switching module, V represents a voltage of the phase power corresponding to the first switching module, and f represents a frequency of the phase power corresponding to the first switching module.

Further, the first duration is calculated by the following equation:

$$T = \frac{\frac{\pi}{2}}{2\pi} * \frac{1}{f} + \Delta T$$

In another embodiment, after turning off the first switching module and the second switching module with the current of zero at the current time instant simultaneously, the controller is further configured to: turn off a switching module that is on among the switching modules connected to the inverter circuit upon monitoring that a current of the switching module is in the descending trend and the actual electrical parameter of the switching module reaches the preset electrical parameter.

In the two embodiments described above, it is determined that the current of the first switching module is in the descending trend by: continuously acquiring multiple currents of the first switching module, and determining that the current of the first switching module is in the descending trend in response to the multiple currents of the first switching module in the descending trend; or determining that the current of the first switching module is in the descending trend upon determining that the periodic voltage curve of phase power corresponding to the first switching module is in the rising trend.

A time interval for acquiring the electrical parameter may be constant, or may change. An electrical parameter acquisition module may be arranged for acquiring and recording the electrical parameter. For example, the time interval is determined based on a frequency or a period of phase power of the inverter circuit. For example, the frequency of the phase power is 50Hz, the period of phase power is 0.025, and the time interval may be one twentieth of the period, that is, 0.001S, so that the current change trend can be determined by multiple times of acquisitions.

In the embodiments described above, the switching module includes at least two relay switches, and a control terminal of each of the relay switches is connected to the controller.

The switching module is turned off by turning off one relay switch in the switching module, or turning off multiple relay switches in the switching module.

Multiple redundant switches are arranged on the switching module, so that the switches can alternately operate, prolonging the service life of each switch.

The inverter according to some embodiments of the present disclosure are described above. Based on this, a corresponding method is provided according to the present disclosure. The method according to an embodiment of the present disclosure is described hereinafter.

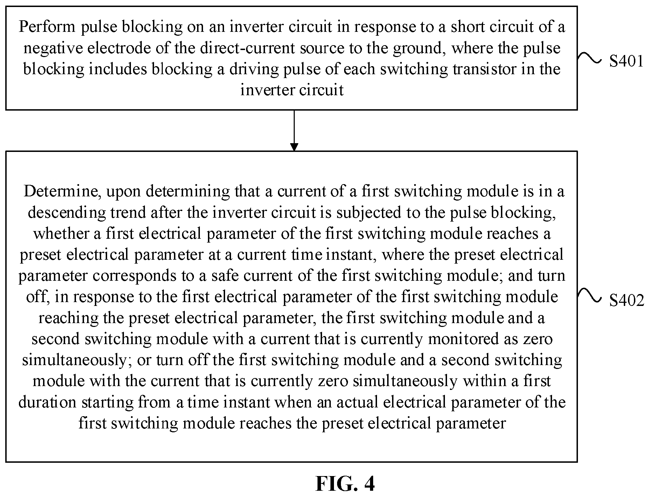

Reference is made to FIG. 4, which is a schematic flowchart of a method for turning off an inverter. The inverter includes an inverter circuit and switching modules. An input end of the inverter circuit is configured to connect a DC source, an output end of each phase of the inverter circuit is connected to a corresponding switching module among the switching modules, and output ends of the switching modules are configured to connect a power grid. The method includes the following steps S401 and 5402.

In step S401, pulse blocking is performed on the inverter circuit in response to a short circuit of a negative electrode of the DC source to ground, where the pulse blocking includes disabling a drive pulse for each switching transistor in the inverter circuit.

In step S402, upon determining that a current of a first switching module is in a descending trend after the inverter circuit is subjected to the pulse blocking, it is determined whether a first electrical parameter of the first switching module reaches a preset electrical parameter at a current time instant, where the preset electrical parameter corresponds to a safe current of the first switching module; and the first switching module and a second switching module with a current of zero at the current time instant are turned off simultaneously in response to the first electrical parameter of the first switching module reaching the preset electrical parameter.

Alternatively, upon determining that the current of the first switching module is in the descending trend after the inverter circuit is subjected to the pulse blocking, the first switching module and the second switching module with the current that is currently zero are turned off simultaneously within a first duration starting from a time instant when an actual electrical parameter of the first switching module reaches the preset electrical parameter.

Each of the first switching module and the second switching module is one of the switching modules connected to the inverter.

Based on the method for turning off the inverter described above, the first switching module and the second switching module are turned off simultaneously, disconnecting parallel capacitors in the short-circuited inverter to the ground from the power grid, avoiding the problem of circulating current such as alternating-current resonance due to a capacitance difference between various phases of other inverters in normal operation is large resulted from that the parallel capacitors in the short-circuited inverter to the ground are connected to the power grid, so that the other inverters in normal operation can stably transmit electric energy to the power grid.

In an embodiment, the first electrical parameter of the first switching module reaching the preset electrical parameter includes: determining that the first electrical parameter of the first switching module reaches the preset electrical parameter if the first electrical parameter is a current and the first electrical parameter of the first switching module is less than or equal to a first preset current; and determining that the first electrical parameter of the first switching module reaches the preset electrical parameter if the first electrical parameter is a voltage and the first electrical parameter of the first switching module is greater than or equal to a first preset voltage.

In another embodiment, after the determining whether the first electrical parameter of the first switching module reaches the preset electrical parameter at the current time instant, the method further includes: continuously monitoring the current of the first switching module if the first electrical parameter is the current and the current of the first switching module is greater than the first preset current, until it is monitored that the current of the first switching module decreases to be less than or equal to the first preset current; and determining that the first electrical parameter of the first switching module reaches the preset electrical parameter; or continuously monitoring a voltage of the first switching module if the first electrical parameter is the voltage and the voltage of the first switching module is less than the first preset voltage, until it is monitored that the voltage of the first switching module increases to be greater than or equal to the first preset voltage; and determining that the first electrical parameter of the first switching module reaches the preset electrical parameter.

Further, after the turning off the first switching module and the second switching module simultaneously, the method further includes turning off a switching module that is on among the switching modules connected to the inverter circuit upon monitoring that a current of the switching module is in the descending trend and the first electrical parameter of the switching module reaches the preset electrical parameter.

In an embodiment, the actual electrical parameter reaching the preset electrical parameter lies in that an actual current is less than or equal to the preset electrical parameter.

In an embodiment, the preset electrical parameter is zero; the first duration is a sum of a first time length and a quarter of a period of phase power corresponding to the first switching module; and the first time length is a time length from a time instant when the current of the first switching module decreases to zero to a nearest time instant when the voltage of the first switching module is zero.

In another embodiment, the preset electrical parameter is a current corresponding to a first time instant, the first time instant is a periodic time instant determined by subtracting a first delay duration from a time instant when a current in a periodic current curve corresponding to the first switching module decreases to zero. The first delay duration includes a duration from a time instant when a turn-off signal is sent to the first switching module to a time instant when the first switching module is actually turned off. The first duration is a sum of the first time length and a quarter of a period of phase power corresponding to the first switching module.

In another embodiment, the preset electrical parameter is a current corresponding to a second time instant, the second time instant is a periodic time instant determined by subtracting a second delay duration from a time instant when a current in the periodic current curve corresponding to the first switching module decreases to zero. The second delay duration includes a duration from a time instant when the turn-off signal is sent to the first switching module to a time instant when the first switching module is actually turned off, and a power-resistant duration from a time instant corresponding to a maximum impulse current withstood by the first switching module to the time instant when the current in a descending portion of the periodic current curve decreases to zero. The first duration is a sum of the first time length, a quarter of a period of phase power corresponding to the first switching module and two times of the power-resistant duration.

In another embodiment, the actual electrical parameter reaching the preset electrical parameter lies in that an actual voltage is greater than or equal to the preset electrical parameter.

In an embodiment, the preset electrical parameter is a voltage corresponding to a time instant when a current of the first switching module decreases to zero. The first duration is a sum of the first time length and a quarter of a period of phase power corresponding to the first switching module. The first time length is a time length from a time instant when the current of the first switching module decreases to zero to a nearest time instant when the voltage of the first switching module is zero.

In another embodiment, the preset electrical parameter is a voltage corresponding to a time instant determined by subtracting a first delay duration from a time instant when a current of the first switching module decreases to zero. The first delay duration includes a duration from a time instant when the turn-off signal is sent to the first switching module to a time instant when the first switching module is actually turned off. The first duration is a sum of the first time length and a quarter of a period of phase power corresponding to the first switching module.

In another embodiment, the preset electrical parameter is a voltage corresponding to a time instant determined by subtracting a second delay duration from the time instant when the current of the first switching module decreases to zero. The second delay duration includes a duration from a time instant when the turn-off signal is sent to the first switching module to the time instant when the first switching module is actually turned off, and a power-resistant duration from a time instant corresponding to the maximum impulse current withstood by the first switching module to the time instant when the current in the descending portion of the periodic current curve decreases to zero. The first duration is a sum of the first time length, a quarter of a period of phase power corresponding to the first switching module and two times of the power-resistant duration.

Further, the first time length is calculated by the following equation:

$$\Delta T = \frac{2\pi - \arcsin\left(\frac{V}{\sqrt{2}U}\right)}{2\pi} * \frac{1}{f}, \quad \frac{3\pi}{2} < \arcsin\left(\frac{V}{\sqrt{2}U}\right) < 2\pi$$

where, U represents a rated voltage of the phase power corresponding to the first switching module, V represents a voltage of the phase power corresponding to the first switching module, and f represents a frequency of the phase power corresponding to the first switching module.

Further, after turning off the first switching module and the second switching module with the current that is currently zero simultaneously, the method further includes: turning off a switching module that is on among the switching modules connected to the inverter circuit upon monitoring that a current of the switching module is in the descending trend and the actual electrical parameter of the switching module reaches the preset electrical parameter.

In an embodiment, it is determined that the current of the first switching module is in the descending trend by: continuously acquiring multiple currents of the first switching module, and determining that the current of the first switching module is in the descending trend in response to the multiple currents of the first switching module in the descending trend; or determining that the current of the first switching module is in the descending trend upon determining that the periodic voltage curve of phase power corresponding to the first switching module is in the rising trend.

In an embodiment, a photovoltaic system is further provided according to the present disclosure. The photovoltaic system includes a photovoltaic string and an inverter. The photovoltaic string is connected to an input end of the inverter, and is configured to supply DC power to the inverter. An output end of the inverter is configured to connect a power grid, and convert DC power into alternating-current (AC) power and transmit the AC power to the power grid, where the inverter is at least one of the inverter according to any one of the embodiments described above or the inverter to which the method for turning off an inverter is applied described above.

A corresponding device and a computer storage medium are further provided according to embodiments of the present disclosure, for implementing the solutions according to the embodiments of the present disclosure.

The device includes a memory and a processor, the memory is configured to store an instruction or code, and the processor is configured to execute the instruction or code, so that the device performs the method for turning off the inverter according to any embodiment of the present disclosure.

The computer storage medium stores codes. The codes cause, when being executed by a device, the device to perform the method for turning off the inverter according to any embodiment of the present disclosure.

The expressions "first", "second" (if any) and similar variant described in the embodiments of the present disclosure are used only for distinguish different names, rather than indicating the first or the second in a sequence.

From the descriptions of the above embodiments, those skilled in the art can clearly appreciate that all or a part of steps in the method according to the above embodiments may be implemented by means of software and a general hardware platform. Based on such understanding, technical solutions of the present disclosure may be embodied as a software product. The computer software product may be stored in a storage medium, such as a read-only memory (ROM)/RAM, a magnetic disc, or an optical disk, and the computer software product includes multiple instructions for enabling a computer device (which may be a personal computer, a server, or a network communication device such as a router) to perform the methods described in various embodiments or some parts of the embodiments of the present disclosure.

The embodiments are described in this specification in a progressive manner. Various embodiments may refer to each other for the same or similar parts, and each embodiment places emphasis on a difference from other embodiments. Especially, for the apparatus embodiments, since they are similar with the method embodiments, the description of the apparatuses is simple, and reference may be made to the relevant part of the method embodiments. Some or all of the modules may be selected as needed to achieve the purpose of the solution of the embodiments. Those skilled in the art can understand and implement the solution without any creative effort.

The foregoing descriptions are only exemplary embodiments of the present disclosure, and are not intended to limit the protection scope of the present disclosure.

**Claims**

1. An inverter, comprising:

   an inverter circuit;
   switching modules; and
   a controller, wherein
   an input end of the inverter circuit is configured to connect a direct-current, DC, source, an output end of each phase of the inverter circuit is connected to a corresponding switching module among the switching modules, and output ends of the switching modules are configured to connect a power grid; and
   the controller is configured to:

   perform pulse blocking on the inverter circuit in response to a short circuit of a negative electrode of the DC source to ground, wherein the pulse blocking comprises disabling a drive pulse for each switching transistor in the inverter circuit;
   determine, upon determining that a current of a first switching module is in a descending trend after the inverter circuit is subjected to the pulse blocking, whether a first electrical parameter of the first switching module reaches a preset electrical parameter at a current time instant, wherein the preset electrical parameter corresponds to a safe current of the first switching module; and

turn off, in response to the first electrical parameter of the first switching module reaching the preset electrical parameter, the first switching module and a second switching module with a current that is currently monitored as zero simultaneously; or

turn off the first switching module and a second switching module with a current that is currently zero simultaneously within a first duration starting from a time instant when an actual electrical parameter of the first switching module reaches the preset electrical parameter, wherein the first switching module and the second switching module each are one of the switching modules.

2. The inverter according to claim 1, wherein for the determining whether a first electrical parameter of the first switching module reaches a preset electrical parameter, the controller is configured to:

determine that the first electrical parameter of the first switching module reaches the preset electrical parameter if the first electrical parameter is a current and the first electrical parameter of the first switching module is less than or equal to a first preset current; and

determine that the first electrical parameter of the first switching module reaches the preset electrical parameter if the first electrical parameter is a voltage and the first electrical parameter of the first switching module is greater than or equal to a first preset voltage.

3. The inverter according to claim 2, wherein after the determining whether a first electrical parameter of the first switching module reaches a preset electrical parameter at a current time instant, the controller is further configured to:

continuously monitor the current of the first switching module if the first electrical parameter is the current and the current of the first switching module is greater than the first preset current, until it is monitored that the current of the first switching module decreases to be less than or equal to the first preset current; and determine that the first electrical parameter of the first switching module reaches the preset electrical parameter; or

continuously monitor a voltage of the first switching module if the first electrical parameter is the voltage and the voltage of the first switching module is less than the first preset voltage, until it is monitored that the voltage of the first switching module increases to be greater than or equal to the first preset voltage; and determine that the first electrical parameter of the first switching module reaches the preset electrical parameter.

4. The inverter according to claim 3, wherein after the turning off the first switching module and the second switching module simultaneously, the controller is further configured to:
turn off a switching module that is on among the switching modules connected to the inverter circuit upon monitoring that a current of the switching module is in the descending trend and the first electrical parameter of the switching module reaches the preset electrical parameter.

5. The inverter according to claim 1, wherein the actual electrical parameter reaching the preset electrical parameter lies in that:
an actual current is less than or equal to the preset electrical parameter.

6. The inverter according to claim 3, wherein a first time length is a time length from a time instant when the current of the first switching module decreases to zero to a nearest time instant when the voltage of the first switching module is zero, wherein

the preset electrical parameter is zero; the first duration is a sum of the first time length and a quarter of a period of phase power corresponding to the first switching module;

the preset electrical parameter is a current corresponding to a first time instant, the first time instant is a periodic time instant determined by subtracting a first delay duration from a time instant when a current in a periodic current curve corresponding to the first switching module decreases to zero, the first delay duration comprises a duration from a time instant when a turn-off signal is sent to the first switching module to a time instant when the first switching module is actually turned off, and the first duration is a sum of the first time length and a quarter of a period of phase power corresponding to the first switching module; or

the preset electrical parameter is a current corresponding to a second time instant, the second time instant is a periodic time instant determined by subtracting a second delay duration from a time instant when a current in a periodic current curve corresponding to the first switching module decreases to zero; the second delay duration comprises a duration from a time instant when a turn-off signal is sent to the first switching module to a time instant when the first switching module is actually turned off, and a power-resistant duration from a time instant corresponding to a maximum impulse current withstood by the first switching module to the time instant when the current in a descending portion of the periodic current curve decreases to zero; and the first duration is a sum of the first time length, a quarter of a period of phase power corresponding to the first switching module and two times of the power-resistant duration.

7. The inverter according to claim 1, wherein the actual electrical parameter reaching the preset electrical parameter lies in that:
an actual voltage is greater than or equal to the preset electrical parameter.

8. The inverter according to claim 7, wherein a first time length is a time length from a time instant when the current of the first switching module decreases to zero to a nearest time instant when a voltage of the first switching module is zero, wherein

the preset electrical parameter is a voltage corresponding to a time instant when the current of the first switching module decreases to zero; and the first duration is a sum of the first time length and a quarter of a period of phase power corresponding to the first switching module;
the preset electrical parameter is a voltage corresponding to a time instant determined by subtracting a first delay duration from a time instant when the current of the first switching module decreases to zero, the first delay duration comprises a duration from a time instant when a turn-off signal is sent to the first switching module to a time instant when the first switching module is actually turned off; and the first duration is a sum of the first time length and a quarter of a period of phase power corresponding to the first switching module; or
the preset electrical parameter is a voltage corresponding to a time instant determined by subtracting a second delay duration from a time instant when the current of the first switching module decreases to zero; the second delay duration comprises a duration from a time instant when a turn-off signal is sent to the first switching module to a time instant when the first switching module is actually turned off, and a power-resistant duration from a time instant corresponding to a maximum impulse current withstood by the first switching module to a time instant when the current in a descending portion of the periodic current curve decreases to zero; and the first duration is a sum of the first time length, a quarter of a period of phase power corresponding to the first switching module and two times of the power-resistant duration.

9. The inverter according to claim 6 or 8, wherein

the first time length is calculated by the following equation:

$$\Delta\ T = \frac{2\pi - \arcsin\left(\frac{V}{\sqrt{2}U}\right)}{2\pi} * \frac{1}{f}, \quad \frac{3\pi}{2} < \arcsin\left(\frac{V}{\sqrt{2}U}\right) < 2\pi$$

wherein, U represents a rated voltage of the phase power corresponding to the first switching module, V represents a voltage of the phase power corresponding to the first switching module, and f represents a frequency of the phase power corresponding to the first switching module.

10. The inverter according to claim 9, wherein after the turning off the first switching module and a second switching module with a current that is currently zero simultaneously, the controller is further configured to:
turn off a switching module that is on among the switching modules connected to the inverter circuit upon monitoring that a current of the switching module is in the descending trend and the actual electrical parameter of the switching module reaches the preset electrical parameter.

11. The inverter according to claim 1, wherein for determining that a current of a first switching module is in a descending trend, the controller is further configured to:

continuously acquire a plurality of currents of the first switching module; and determine that the current of the first switching module is in the descending trend in response to the plurality of currents of the first switching module in the descending trend; or
determine that the current of the first switching module is in the descending trend upon determining that a periodic voltage curve of phase power corresponding to the first switching module is in a rising trend.

12. A method for turning off an inverter, wherein the inverter comprises: an inverter circuit and switching modules; an input end of the inverter circuit is configured to connect a direct-current, DC, source, an output end of each phase of the inverter circuit is connected to a corresponding switching module among the switching modules, and output ends of the switching modules are configured to connect a power grid, and the method comprises:

performing pulse blocking on the inverter circuit in response to a short circuit of a negative electrode of the DC source to ground, wherein the pulse blocking comprises disabling a drive pulse for each switching transistor in the inverter circuit; and

determining, upon determining that a current of a first switching module is in a descending trend after the inverter circuit is subjected to the pulse blocking, whether a first electrical parameter of the first switching module reaches a preset electrical parameter at a current time instant, wherein the preset electrical parameter corresponds to a safe current of the first switching module; and

turning off, in response to the first electrical parameter of the first switching module reaching the preset electrical parameter, the first switching module and a second switching module with a current that is currently monitored as zero simultaneously; or

turning off the first switching module and a second switching module with a current that is currently zero simultaneously within a first duration starting from a time instant when an actual electrical parameter of the first switching module reaches the preset electrical parameter, wherein the first switching module and the second switching module each are one of the switching modules.

13. A photovoltaic system, comprising:

a photovoltaic string; and
an inverter, wherein
the photovoltaic string is connected to an input end of the inverter, and is configured to supply direct-current, DC, power to the inverter;
an output end of the inverter is configured to connect a power grid, convert DC power into alternating-current, AC, power, and transmit the AC power to the power grid; and
the inverter is at least one of the inverter according to any one of claims 1 to 11 or the inverter to which the method according to claim 12 is applied.

**FIG. 1**

**FIG. 2**

**FIG. 3**

Perform pulse blocking on an inverter circuit in response to a short circuit of a negative electrode of the direct-current source to the ground, where the pulse blocking includes blocking a driving pulse of each switching transistor in the inverter circuit

~ S401

Determine, upon determining that a current of a first switching module is in a descending trend after the inverter circuit is subjected to the pulse blocking, whether a first electrical parameter of the first switching module reaches a preset electrical parameter at a current time instant, where the preset electrical parameter corresponds to a safe current of the first switching module; and turn off, in response to the first electrical parameter of the first switching module reaching the preset electrical parameter, the first switching module and a second switching module with a current that is currently monitored as zero simultaneously; or turn off the first switching module and a second switching module with the current that is currently zero simultaneously within a first duration starting from a time instant when an actual electrical parameter of the first switching module reaches the preset electrical parameter

~ S402

**FIG. 4**

Europäisches
Patentamt

European
Patent Office

Office européen
des brevets

# EUROPEAN SEARCH REPORT

**Application Number**

EP 25 15 0659

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 116 316 445 A (HUAWEI DIGITAL ENERGY TECH CO LTD) 23 June 2023 (2023-06-23) * the whole document * | 1-13 | INV. H02M1/36 H02H7/122 H02M7/493 |
| X | CN 117 239 684 A (SUNGROW POWER SUPPLY CO LTD) 15 December 2023 (2023-12-15) | 13 | H02M7/487 H02H3/087 |
| A | * the whole document * | 1-12 | ADD. |
| X | US 2023/208312 A1 (GAO YONGBING [CN] ET AL) 29 June 2023 (2023-06-29) | 13 | H02M1/32 |
| A | * paragraph [0002] * * paragraph [0102] - paragraph [0114] * * figures 6,7 * | 1-12 | |

TECHNICAL FIELDS
SEARCHED        (IPC)

H02M
H02H

The present search report has been drawn up for all claims

| Place of search | Date of completion of the search | Examiner |
|---|---|---|
| The Hague | 18 June 2025 | Lochhead, Steven |

EPO FORM 1503 03.82 (P04C01)

## ANNEX TO THE EUROPEAN SEARCH REPORT
## ON EUROPEAN PATENT APPLICATION NO.

EP 25 15 0659

This annex lists the patent family members relating to the patent documents cited in the above-mentioned European search report.
The members are as contained in the European Patent Office EDP file on
The European Patent Office is in no way liable for these particulars which are merely given for the purpose of information.

18-06-2025

| Patent document cited in search report | | Publication date | Patent family member(s) | | Publication date |
|---|---|---|---|---|---|
| CN 116316445 | A | 23-06-2023 | CN | 116316445 A | 23-06-2023 |
| | | | CN | 117791511 A | 29-03-2024 |
| CN 117239684 | A | 15-12-2023 | CN | 117239684 A | 15-12-2023 |
| | | | WO | 2025055134 A1 | 20-03-2025 |
| US 2023208312 | A1 | 29-06-2023 | AU | 2021336496 A1 | 13-04-2023 |
| | | | CN | 112234645 A | 15-01-2021 |
| | | | EP | 4199293 A1 | 21-06-2023 |
| | | | US | 2023208312 A1 | 29-06-2023 |
| | | | WO | 2022048345 A1 | 10-03-2022 |

EPO FORM P0459

For more details about this annex : see Official Journal of the European Patent Office, No. 12/82